# FASCICULE DE BREVET EUROPEEN

(11) **EP 1 604 065 B1**
(45) Date de publication et mention de la délivrance du brevet: **12.07.2006**
(21) Numéro de dépôt: 04718323.1
(22) Date de dépôt: 08.03.2004
(51) Int. Cl.: E01B 9/16, F16B 13/14

(54) **PROCEDE DE REPARATION D UN ANCRAGE DE RAIL DE CHEMIN DE FER SUR UNE TRAVERSE EN BOIS ET INSERT UTILISE POUR LA MISE EN OEUVRE DE CE PROCEDE**
VERFAHREN ZUR WIEDEREINSETZUNG EINER AUF EINER HOLZSCHWELLE EINGESETZTEN SCHIENENVERANKERUNG UND EINLAGE ZUR DURCHFÜHRUNG DES VERFAHRENS
METHOD OF REPAIRING A RAILWAY RAIL ANCHOR ON A WOODEN SLEEPER AND INSERT USED FOR PERFORMING THE METHOD

(30) Priorité: 20.03.2003 FR 0303401
(43) Date de publication de la demande: 14.12.2005
(73) Titulaire: Vape Rail International, 01102 Oyonnax Cedex (FR)
(72) Inventeur: MAHIKIAN, Edmond, F-01130 Nantua (FR); RIGAUDIER, Yves, F-01590 Dortan (FR)
(74) Mandataire: Jeannet, Olivier
(86) Numéro de dépôt international: PCT/FR2004/000542
(87) Numéro de publication internationale: WO 2004/088041

(56) Documents cités:
- FR-A- 575 021
- FR-A- 919 356
- FR-A- 2 209 373
- GB-A- 1 459 875
- JP-A- 5 196 017

## Description

La présente invention concerne un procédé de réparation d'un ancrage de rail de chemin de fer sur une traverse en bois. L'invention concerne également un insert utilisé pour la mise en oeuvre de ce procédé.

Les rails de chemin de fer sont fixés à des traverses en bois au moyen de tire-fond métalliques.

Au fil du temps, de l'humidité s'infiltre entre certains tire-fond et les traverses, venant dégrader les zones du bois dans lesquelles ces tire-fond sont ancrés. Il en résulte une prise de jeu des tire-fond par rapport aux traverses, venant amoindrir la fixation des rails. Cette prise de jeu est accentuée par les contraintes transmises par le passage des trains, rendant obligatoire une réparation des traverses.

Un procédé connu de réparation d'une traverse en bois consiste à retirer le tire-fond concerné, à aléser le trou de réception de ce tire-fond, à mettre en place, avec collage, un cylindre de bois venant remplir ce trou alésé et, une fois le collage intervenu, à percer ce cylindre pour réaménager un trou de réception du tire-fond.

Ce procédé a pour inconvénient d'être relativement long et difficile à mettre en oeuvre. Il nécessite en particulier plusieurs opérations séparées dans le temps pour pouvoir serrer le tire-fond selon le couple de serrage requis.

Il est également connu un procédé consistant à retirer le tire-fond concerné, à mettre en place une cheville ou un insert hélicoïdal dans le trou à traiter, puis à revisser le tire-fond dans la cheville ou l'insert, reformant ainsi une zone solide d'ancrage du tire-fond.

Ce procédé a pour inconvénient de ne pas permettre de remédier à la détérioration du bois, qui se poursuit en cas de nouvelles infiltrations. De plus, la fixation obtenue est plus ou moins sujette à caution en cas de traverse fortement dégradée.

Il est en outre connu par le document GB-A-1 459 875 un procédé de réparation d'un ancrage de rail de chemin de fer sur une traverse en bois comprenant les étapes consistant à :
- retirer le tire-fond concerné ;
- utiliser un insert tubulaire, à structure grillagée, propre à être engagé dans le trou à traiter pour prendre appui contre la paroi de la traverse et permettre une prise d'appui du tire-fond contre lui, afin de permettre une remise en place du tire-fond par vissage ;
- à placer cet insert dans le trou à traiter ;
- à déposer dans le trou à traiter un produit fluide durcissable, propre, avant durcissement, à fluer dans les fibres du bois ;
- à revisser le tire-fond de manière à écraser l'insert entre ce tire-fond et la paroi du trou, faisant ainsi fluer ledit produit fluide durcissable autour de ce tire-fond et au travers de l'insert.

L'insert selon ce document antérieur a pour inconvénients de ne pas permettre, en cas de trou élargi ou évasé sous l'effet des contraintes transmises par le tire-fond, de mettre en place plusieurs inserts adaptés au diamètre ou à la forme de ce trou. De plus, cet insert connu antérieurement apparaît relativement difficile à enfoncer dans le trou et susceptible de s'écraser au fond du trou, alors qu'il est essentiel que l'insert soit présent et efficace au fond de ce trou. L'insert connu présente en outre un risque de déplacement vers le fond de la gaine lors du vissage du tire-fond, réalisant un bourrage de l'insert en fond de gaine qui vient gêner ou empêcher le complet serrage du tire-fond.

La présente invention vise à remédier à ces inconvénients.

Son objectif est donc de fournir un procédé de réparation d'un ancrage de rail de chemin de fer sur une traverse en bois permettant de réaliser une fixation fiable et pérenne de tire-fond ayant pris du jeu, tout en étant rapide et facile à mettre en oeuvre.

Le procédé qu'elle concerne comprend les étapes connues consistant à :
- retirer le tire-fond concerné ;
- utiliser un insert propre à être engagé dans le trou à traiter pour prendre appui contre la paroi de la traverse et permettre une prise d'appui du tire-fond contre lui, afin de permettre une remise en place du tire-fond par vissage ;
- placer cet insert dans le trou à traiter ;
- déposer dans le trou à traiter un produit fluide durcissable, propre, avant durcissement, à fluer dans les fibres du bois ;
- revisser le tire-fond de manière à écraser l'insert entre ce tire-fond et la paroi du trou, faisant ainsi fluer ledit produit fluide durcissable autour de ce tire-fond et au travers de l'insert.

Selon l'invention, le procédé comprend en outre les étapes consistant à :
- utiliser au moins un insert en forme de portion longitudinale péritubulaire de tube, notamment hémi-tubulaire, ayant une longueur légèrement inférieure à la longueur du trou à traiter et comprenant des trous le traversant, qui mettent en communication sa face concave et sa face convexe ; et
- placer ce ou ces inserts dans le trou à traiter de telle sorte que la face convexe de chaque insert soit tournée du côté de la paroi de la traverse et que la face concave de chaque insert soit tournée vers l'axe du trou.

Le procédé selon l'invention utilise ainsi un ou plusieurs inserts qui permettent de reconstituer une paroi dans laquelle peut pénétrer le filet du tire-fond lorsque ce tire-fond est revissé, et qui permet par conséquent au tire-fond de progresser vers le fond du trou lorsqu'il est vissé, et ce même lorsque le trou a été élargi ou évasé sous l'effet des contraintes transmises à la traverse par le tire-fond. Il est en effet essentiel, pour l'établissement d'un bon d'ancrage du rail, que le tire-fond soit non seulement solidement fixé dans la traverse mais surtout qu'il se trouve très proche du rail ; la mise en place d'un ou plusieurs inserts selon l'invention, superposés ou juxtaposés, permet de toujours replacer le tire-fond au contact du rail, étendant ainsi au maximum la surface de contact du tire-fond avec le rail.

Le procédé selon l'invention permet en outre de s'assurer que le ou les inserts sont bien engagés en fond de gaine, et d'éliminer tout risque de bourrage au niveau de ce fond lors du vissage du tire-fond. Une fois le ou les inserts enfoncés, il est ainsi toujours possible de visser correctement le tire-fond pour provoquer un fluage suffisant du produit fluide durcissable entre le ou les inserts et la traverse. Ce fluage permet une répartition homogène de ce produit fluide durcissable autour du tire-fond, telle que ce produit vient effectivement boucher les cavités, fissures et autres crevasses résultant de la dégradation du bois et vient, de plus, parfaitement colmater l'interstice entre le tire-fond et la traverse après serrage complet de ce tire-fond.

Le procédé selon l'invention permet de serrer immédiatement le tire-fond selon le couple de serrage requis, généralement 12 à 15 m.kg, sans coupure de la voie, de reconstituer le filet du tire-fond pour l'obtention d'un ancrage parfaitement solide du tire-fond dans la traverse, et de parfaitement prévenir toutes nouvelles infiltrations d'eau, et ce, par des opérations simples et rapides à mettre en oeuvre, immédiatement successives les unes des autres.

La diffusion dudit produit fluide durcissable dans le bois permet d'assainir ce bois et de le rendre hydrophobe, conférant à la traverse une plus grande longévité.

Ledit produit fluide durcissable peut notamment être une résine polymérisable, et en particulier une résine époxy, éventuellement chargée pour présenter une consistance pâteuse.

Ce procédé peut comprendre une étape d'enfoncement de l'insert dans le trou à traiter au moyen d'un mandrin, si cela est nécessaire pour la mise en place de cet insert en profondeur dans ce trou.

Le procédé peut comprendre une étape d'orientation angulaire de l'insert dans le trou à traiter afin de permettre de disposer cet insert de la manière la plus adéquate dans ce trou, en fonction de la position du rail ou en fonction des zones dégradées de la traverse.

L'invention concerne également un insert tel que défini pour la revendication 5.

Dans le cas de l'utilisation de plusieurs inserts dans un même trou, il est possible de relier ces inserts par une ou plusieurs liaisons permettant de maintenir ces inserts dans une position relative souhaitée.

La mise en place des inserts dans le trou est ainsi facilitée.

Cet insert est de préférence réalisé en une matière synthétique moulée, et la ou lesdites liaisons peuvent être réalisées sous forme des liens ou ponts de matière synthétique venues de moulage avec les inserts.

Chaque insert comprend avantageusement des trous étagés sur sa longueur, permettant une diffusion homogène du produit fluide durcissable au travers de lui.

L'insert peut également comprendre des nervures sensiblement transversales, faisant saillie de sa face convexe.

Ces nervures favorisent l'accrochage de l'insert à la paroi de la traverse au moment du vissage du tire-fond et permettent de délimiter entre elles des rainures débouchant latéralement, qui guident latéralement le produit fluide durcissable lors du fluage de ce produit et contribuent ainsi à permettre une diffusion homogène de ce produit.

L'insert peut en outre comprendre des rainures internes aménagées à partir de sa face concave, formant un pré-filetage de réception du filet du tire-fond. Ces rainures sont avantageusement décalées longitudinalement par rapport auxdites nervures.

L'insert peut également comprendre des moyens permettant sa venue en prise de rotation avec un outil, cet outil étant utilisé pour réaliser l'orientation angulaire précitée de l'insert dans le trou à traiter. Ces moyens peuvent comprendre une encoche aménagée au niveau de la partie de l'insert située en partie supérieure lorsque cet insert est placé dans le trou à traiter, et un bossage correspondant formé sur ledit outil, venant prendre place dans cette encoche lorsque l'outil est engagé dans le trou à traiter.

Cet outil peut notamment être le mandrin précité.

L'insert peut également comprendre une extrémité située en partie inférieure lorsque cet insert est engagé dans le trou à traiter, présentant une forme élargie, notamment en portion de cercle, et de préférence conique, propre à venir obturer au moins partiellement l'orifice inférieur du trou à traiter, lorsque ce trou est débouchant.

Cette extrémité élargie permet d'éviter une fuite trop importante de produit fluide durcissable au moment du vissage du tire-fond.

Chaque insert peut également comprendre des nervures placées sur la partie supérieure de sa face convexe, pour empêcher sa rotation au moment du vissage du tire-fond.

L'invention sera bien comprise, et d'autres caractéristiques et avantages de celle-ci apparaîtront, en référence au dessin schématique annexé, ce dessin représentant, à titre d'exemple non limitatif, une forme de réalisation préférée d'un insert utilisé pour la mise en oeuvre du procédé concerné.
La figure 1 est une vue en coupe d'un rail de chemin de fer et d'une traverse en bois sur laquelle ce rail est monté, et montre deux tire-fond permettant la fixation de ce rail sur cette traverse ;
les figures 2 à 5 sont des vues de l'insert précité, respectivement de face sur un côté, de côté, en coupe selon la ligne IV-IV de la figure 2 et de face du côté opposé à la vue selon la figure 2, et
les figures 6 à 10 sont des vues partielles, similaires à la figure 1, du rail et de la traverse, au cours de cinq étapes successives de mise en oeuvre du procédé précité.

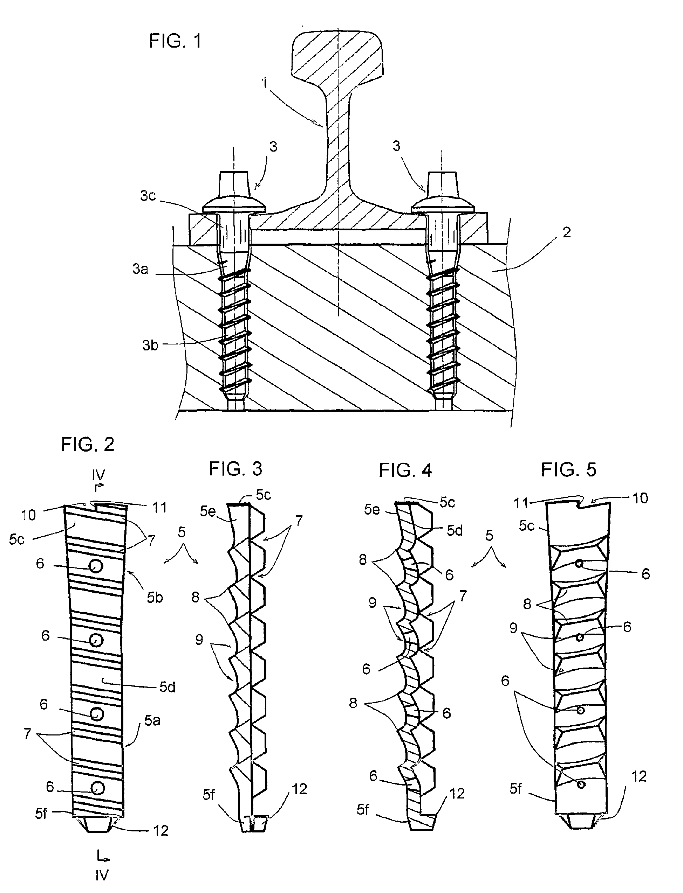

La figure 1 représente un rail de chemin de fer 1 monté sur une traverse 2 en bois, et deux tire-fond 3 permettant la fixation de ce rail 1 sur cette traverse 2.

A la suite d'infiltrations d'eau entre le tire-fond 3 représenté sur la gauche de la figure 1 et la traverse 2, ce tire-fond 3 a pris du jeu, et il est nécessaire de réparer la traverse 2 afin d'assurer à nouveau une parfaite fixation de ce tire-fond 3 dans la traverse 2.

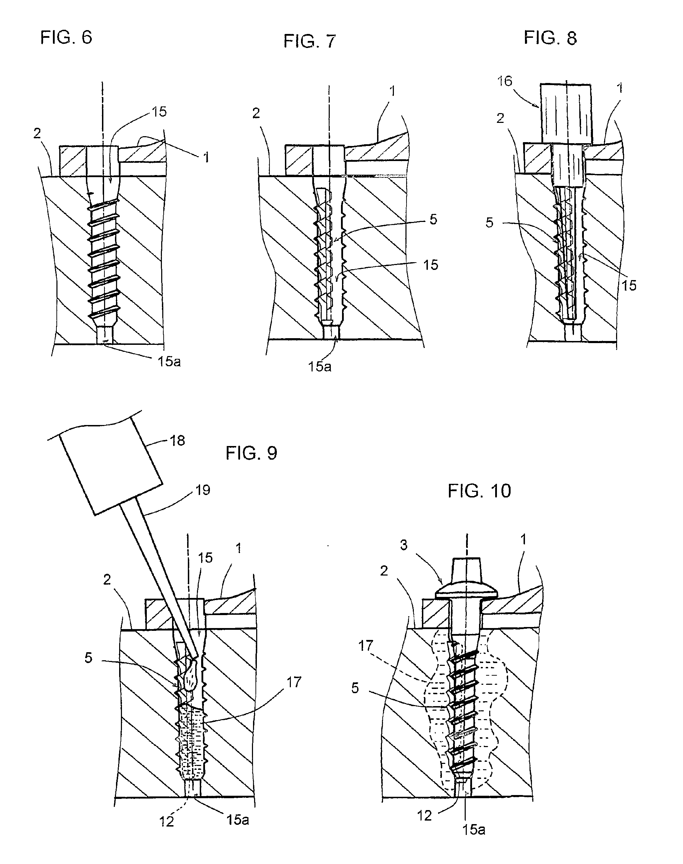

Cette réparation est réalisée en utilisant l'insert 5 montré plus particulièrement sur les figures 2 à 5 et en mettant en oeuvre le procédé dont cinq étapes successives sont illustrées sur les figures 6 à 10.

En référence aux figures 2 à 5, il apparaît que l'insert 5 présente une forme générale sensiblement hémi-tubulaire, ayant une portion 5a de diamètre constant et une portion 5b allant en s'élargissant depuis la zone médiane de l'insert 5 en direction d'une extrémité 5c de cet insert.

Il apparaît sur la figure 7 que l'insert 5 est destiné à être engagé dans le trou 15 recevant le tire-fond 3 à traiter. L'extrémité 5c est celle destinée à être placée au niveau supérieur lorsque l'insert 5 est engagé dans ce trou 15, et l'élargissement de la portion 5b permet à l'insert 5 d'être coincé dans le trou 15 tout en s'adaptant à la forme évasée que présente la partie supérieure du trou 15 pour recevoir la partie évasée 3a que présente le tire-fond 3 entre sa partie filetée 3b et une partie cylindrique 3c engagée au travers du trou du rail 1.

L'insert 5 a une longueur légèrement inférieure à la longueur du trou 15 de telle sorte que cet insert s'étend, une fois placé dans ce trou, sur une majeure partie de la longueur de ce trou.

L'insert 5 comprend quatre trous 6 étagés sur sa longueur, mettant en communication sa face concave 5d et sa face convexe 5e. Il comprend également des rainures inclinées 7, régulièrement réparties, aménagées au niveau de sa face concave 5d, et une alternance de nervures 8 et de rainures 9, également inclinées et régulièrement réparties, aménagées au niveau de sa face convexe 5e.

Les nervures 8 et rainures 7, 9 sont disposées selon un pas correspondant sensiblement au pas du filet du tire-fond 3. Comme le montre la figure 10, les rainures 7 sont destinées à recevoir le filet du tire-fond 3 et, comme le montre la figure 7, les nervures 8 sont destinées à venir plus ou moins en engagement avec le filetage aménagé à l'origine dans le bois de la traverse 2 lors de la première mise en place du tire-fond 3.

À son extrémité 5c, l'insert 5 comprend une encoche 10 délimitant une paroi 11 orientée substantiellement axialement, laquelle forme un moyen de prise d'appui permettant de lier en rotation l'insert 5 et un mandrin 16 d'enfoncement/orientation pouvant être utilisé au moment de la mise en place de cet insert. Ce mandrin 16, visible sur la figure 8, comprend un bossage pouvant être reçu dans cette encoche 10 et prendre appui contre la paroi 11.

À son extrémité 5f opposée à l'extrémité 5c, l'insert 5 comprend une portion élargie 12, de forme partiellement circulaire et conique vue latéralement. Comme le montre plus particulièrement la figure 7, cette portion 12 est propre à venir obturer au moins partiellement l'orifice inférieur 15a du trou 15 lorsque ce trou est débouchant.

L'insert 5 est réalisé en une matière synthétique moulée courante.

En pratique, le tire-fond 3 à traiter est retiré (cf. figure 6) puis l'insert 5 est placé dans le trou 15 de telle sorte que la face convexe 5e de cet insert se trouve contre la paroi de la traverse 2 et que la face concave 5d de cet insert soit tournée vers l'axe du trou 15 (cf. figure 7). Si nécessaire, l'insert 5 est enfoncé dans le trou 15 au moyen du mandrin 16 et/ou est orienté angulairement, également au moyen de ce mandrin 16, en fonction de la position du rail 1 ou en fonction des zones dégradées de la traverse 2 (cf. figure 8).

Un produit pâteux durcissable 17 est alors déposé dans le trou 15 au moyen d'un dispositif d'injection 18 à canule 19 (cf. figure 9), notamment une résine epoxy, puis le tire-fond 3 est revissé. Ce revissage écrase l'insert 5 entre le tire-fond 3 et la paroi du trou 15, faisant ainsi fluer le produit 17 autour de ce tire-fond 3 et entre l'insert 5 et cette paroi, au travers des trous 6, dans les cavités, fissures et autres crevasses résultant de la dégradation du bois (cf. figure 10).

L'insert 5 permet ainsi de reconstituer une paroi dans laquelle peut pénétrer le filet du tire-fond 3 lorsque ce tire-fond est revissé, et permet par conséquent au tire-fond 3 de progresser vers le fond du trou 15 lorsqu'il est vissé. Le tire-fond 3 peut donc, ce faisant, provoquer le fluage du produit 17, qui vient boucher lesdites cavités, fissures et crevasses, et vient parfaitement colmater l'interstice entre le tire-fond 3 et la traverse 2 après serrage complet de ce tire-fond.

L'extrémité 12 permet d'éviter une fuite trop importante de produit 17 au moment du vissage du tire-fond 3, et les rainures 9 guident latéralement le produit 17, contribuant ainsi à permettre une diffusion homogène de ce produit.

Comme cela apparaît de ce qui précède, l'invention fournit un procédé de réparation d'un ancrage de rail de chemin de fer sur une traverse en bois présentant, par rapport aux procédés homologues de la technique antérieure, les avantages déterminants de permettre de reconstituer un ancrage parfaitement solide du tire-fond 3 dans la traverse 2, de permettre de serrer immédiatement le tire-fond selon le couple de serrage requis, et de permettre de parfaitement prévenir toutes nouvelles infiltrations d'eau, et ce, par des opérations simples et rapides à mettre en oeuvre, immédiatement successives les unes des autres.

Il va de soi que l'invention n'est pas limitée à la forme de réalisation décrite ci-dessus à titre d'exemple mais qu'elle s'étend à toutes les formes de réalisation couvertes par les revendications ci-annexées.

## Revendications

1. Procédé de réparation d'un ancrage de rail de chemin de fer (1) sur une traverse en bois (2), cet ancrage étant réalisé au moyen d'un tire-fond (3), comprenant les étapes consistant à :
- retirer le tire-fond (3) concerné ;
- utiliser un insert (5) propre à être engagé dans le trou (15) à traiter pour prendre appui contre la paroi de la traverse (2) et permettre une prise d'appui du tire-fond (3) contre lui, afin de permettre une remise en place du tire-fond (3) par vissage ;
- placer cet insert (5) dans le trou (15) à traiter ;
- déposer dans le trou (15) à traiter un produit fluide durcissable (17), propre, avant durcissement, à fluer dans les fibres du bois ;
- revisser le tire-fond (3) de manière à écraser l'insert (5) entre ce tire-fond (3) et la paroi du trou (15), faisant ainsi fluer ledit produit fluide durcissable (17) autour de ce tire-fond (3) et au travers de l'insert (5);
procédé **caractérisé en ce qu'**il comprend en outre les étapes consistant à :
- utiliser au moins un insert (5) en forme de portion longitudinale péritubulaire de tube, notamment hémi-tubulaire, ayant une longueur légèrement inférieure à la longueur du trou (15) à traiter et comprenant des trous (6) le traversant, qui mettent en communication sa face concave (5d) et sa face convexe (5e) ; et
- placer ce ou ces inserts (5) dans le trou (15) à traiter de telle sorte que la face convexe (5e) de chaque insert (5) soit tournée du côté de la paroi de la traverse (2) et que la face concave (5d) de chaque insert (5) soit tournée vers l'axe du trou (15).

2. Procédé selon la revendication 1, **caractérisé en ce que** le produit fluide durcissable (17) utilisé est une résine polymérisable, en particulier une résine époxy, éventuellement chargée pour présenter une consistance pâteuse.

3. Procédé selon la revendication 1 ou la revendication 2, **caractérisé en ce qu'**il comprend une étape d'enfoncement de l'insert (5) dans le trou (15) à traiter au moyen d'un mandrin (16).

4. Procédé selon l'une des revendications 1 à 3, **caractérisé en ce qu'**il comprend une étape d'orientation angulaire de l'insert (5) dans le trou (15) à traiter afin de permettre de disposer cet insert (5) de la manière la plus adéquate dans ce trou (15).

5. Insert (5) destiné à la réparation d'un ancrage de rail de chemin de fer sur une traverse en bois par mise en oeuvre du procédé selon l'une des revendications 1 à 4, ledit insert (5) étant en forme de portion longitudinale péritubulaire de tube, notamment hémi-tubulaire, comprenant des trous (6) le traversant, destinés à mettre en communication sa face concave (5d) et sa face convexe (5e) et présentent une longueur prédéterminée telle que cette longueur soit légèrement inférieure à la profondeur du trou (15) de traverse à traiter.

6. Insert (5) selon la revendication 5, **caractérisé en ce que** chaque insert (5) est réalisé en une matière synthétique moulée.

7. Insert (5) selon la revendication 5 ou la revendication 6, **caractérisé en ce qu'**il comprend des trous (6) étagés sur sa longueur.

8. Insert (5) selon l'une des revendications 5 à 7, **caractérisé en ce qu'**il comprend des nervures (8) sensiblement transversales, faisant saillie de sa face convexe.

9. Insert (5) selon l'une des revendications 5 à 8, **caractérisé en ce qu'**il comprend des rainures internes (7) aménagées à partir de sa face concave (5d).

10. Insert (5) selon la revendication 9, **caractérisé en ce que** les rainures (7) sont décalées longitudinalement par rapport auxdites nervures (8).

11. Insert (5) selon l'une des revendications 5 à 10, **caractérisé en ce qu'**il comprend des moyens (10, 11) permettant sa venue en prise de rotation avec un outil (16), cet outil (16) étant utilisé pour réaliser une orientation angulaire de l'insert (5) dans le trou (15) à traiter.

12. Insert (5) selon l'une des revendications 5 à 11, **caractérisé en ce qu'**il comprend une extrémité (5f) située au niveau inférieur lorsque cet insert (5) est engagé dans le trou (15) à traiter, présentant une forme élargie, notamment en portion de cercle, et de préférence conique, propre à venir obturer au moins partiellement l'orifice inférieur (15a) du trou (15) à traiter, lorsque ce trou (15) est débouchant.

13. Insert (5) selon l'une des revendications 5 à 12, **caractérisé en ce que** chaque insert comprend des nervures placées sur la partie supérieure de sa face convexe, propres à empêcher sa rotation au moment du vissage du tire-fond.

14. Insert (5) selon l'une des revendications 5 à 13, **caractérisé en ce qu'**il présente une portion (5a) de diamètre constant et une portion (5b) allant en s'élargissant depuis la zone médiane de l'insert (5) en direction d'une extrémité (5c) de cet insert.

15. Ensemble comprenant plusieurs inserts (5) selon l'une des revendications 5 à 14, **caractérisé en ce que** ces inserts sont reliés par une ou plusieurs liaisons permettant de maintenir ces inserts dans une position relative souhaitée.

## Claims

1. Method of repairing a railway rail (1) anchorage on a wooden sleeper (2), that anchorage being effected by means of a sleeper screw (3), comprising the steps consisting of:
- removing the sleeper screw (3) concerned;
- using an insert (5) adapted for introduction into the hole (15) to be treated so as to bear against the wall of the sleeper (2) and to allow the sleeper screw (3) to bear against that insert, in order to allow replacement of the sleeper screw (3) by screwing;
- placing that insert (5) in the hole (15) to be treated;
- depositing in the hole (15) to be treated a fluid hardenable product (17) adapted to flow, before hardening, into the fibres of the wood;
- re-screwing the sleeper screw (3) so as to squeeze the insert (5) between that sleeper screw (3) and the wall of the hole (15), thereby causing said fluid hardenable product (17) to flow around that sleeper screw (3) and through the insert (5);
which method is **characterised in that** it additionally comprises the steps consisting of:
- using at least one insert (5) in the shape of a peritubular longitudinal portion of a tube, especially semi-tubular, having a length slightly less than the length of the hole (15) to be treated and comprising holes (6) through it which communicate between its concave face (5d) and its convex face (5e); and
- placing that or those inserts (5) in the hole (15) to be treated, so that the convex face (5e) of each insert (5) is turned in the direction of the wall of the sleeper (2) and the concave face (5d) of each insert (5) is turned towards the axis of the hole (15).

2. Method according to claim 1, **characterised in that** the hardenable fluid product (17) used is a polymerisable resin, especially an epoxy resin, optionally comprising filler for a paste-like consistency.

3. Method according to claim 1 or claim 2, **characterised in that** it comprises a step of driving the insert (5) into the hole (15) to be treated, by means of a punch (16).

4. Method according to one of claims 1 to 3, **characterised in that** it comprises a step of angular orientation of the insert (5) in the hole (15) to be treated, in order to allow that insert (5) to be disposed in the most appropriate manner **in that** hole (15).

5. Insert (5) intended for repairing a railway rail anchorage on a wooden sleeper by carrying out the method according to one of claims 1 to 4, said insert (5) being in the shape of a peritubular longitudinal portion of a tube, especially semi-tubular, comprising holes (6) through it which are intended to communicate between its concave face (5d) and its convex face (5e) and having a predetermined length such that this length is slightly less than the depth of the hole (15) in the sleeper to be treated.

6. Insert (5) according to claim 5, **characterised in that** each insert (5) is made from a moulded synthetic material.

7. Insert (5) according to claim 5 or claim 6, **characterised in that** it comprises holes (6) spaced over its length.

8. Insert (5) according to one of claims 5 to 7, **characterised in that** it comprises substantially transverse ribs (8) projecting from its convex face.

9. Insert (5) according to one of claims 5 to 8, **characterised in that** it comprises internal grooves (7) introduced from its concave face (5d).

10. Insert (5) according to claim 9, **characterised in that** the grooves (7) are longitudinally offset with respect to said ribs (8).

11. Insert (5) according to one of claims 5 to 10, **characterised in that** it comprises means (10, 11) allowing it to be gripped by a tool (16) for conjoint rotation therewith, that tool (16) being used to bring about angular orientation of the insert (5) in the hole (15) to be treated.

12. Insert (5) according to one of claims 5 to 11, **characterised in that** it comprises an end (5f) which is located at the bottom when that insert (5) has been introduced into the hole (15) to be treated and which has a widened - especially in the shape of a portion of a circle - and preferably conical shape, adapted to come to at least partially block the lower orifice (15a) of the hole (15) to be treated, when that hole (15) is a through-hole.

13. Insert (5) according to one of claims 5 to 12, **characterised in that** each insert comprises ribs located on the upper part of its convex face and adapted to prevent its rotation when the sleeper screw is being screwed in.

14. Insert (5) according to one of claims 5 to 13, **characterised in that** it has a portion (5a) of constant diameter and a widening-out portion (5b) which extends from the middle zone of the insert (5) towards an end (5c) of that insert.

15. Set comprising a plurality of inserts (5) according to one of claims 5 to 14, **characterised in that** those inserts are joined by one or more connections allowing those inserts to be held in a desired relative position.

## Patentansprüche

1. Verfahren zur Reparatur einer Verankerung einer Eisenbahnschiene (1) auf einer Holzschwelle (2), wobei diese Verankerung mittels einer Schwellenschraube (3) erfolgt, umfassend die folgenden Schritte:
- Herausziehen der entsprechenden Schwellenschraube (3);
- Verwenden einer Einlage (5), die in das zu behandelnde Loch (15) eingeführt werden kann, um sich an die Wand der Schwelle (2) anzulegen und ein Anlegen der Schwellenschraube (3) an der Einlage zu ermöglichen, um das Wiedereinsetzen der Schwellenschraube (3) an ihrem Platz durch Verschrauben zu ermöglichen;
- Anordnen dieser Einlage (5) in dem zu behandelnden Loch (15);
- Einbringen eines flüssigen härtbaren Produkts (17), das vor dem Härten in die Fasern des Holzes fließen kann, in das zu behandelnde Loch (15);
- Wiedereinschrauben der Schwellenschraube (3) auf derartige Weise, dass die Einlage (5) zwischen die Schwellenschraube (3) und die Wand des Lochs (15) gepresst wird, wodurch das flüssige härtbare Produkt (17) um die Schwellenschraube (3) herum und durch die Einlage (5) fließen kann;
wobei das Verfahren **dadurch gekennzeichnet ist, dass** es darüber hinaus die folgenden Schritte umfasst:
- Verwenden wenigstens einer Einlage (5), die die Gestalt des peritubulären Längsteils eines Rohres, insbesondere eines Halbrohres, aufweist und eine Länge hat, die etwas geringer ist als die Länge des zu behandelnden Lochs (15), und die durch sie hindurchgehende Löcher (6) umfasst, die ihre konkave Fläche (5d) und ihre konvexe Fläche (5e) miteinander verbinden, und
- Anordnen dieser Einlage(n) (5) in dem zu behandelnden Loch (15) in derartiger Weise, dass die konvexe Fläche (5e) jeder Einlage (5) zur Seite der Wand der Schwelle (2) hin ausgerichtet ist und die konkave Fläche (5d) jeder Einlage (5) zur Achse des Lochs (15) hin ausgerichtet ist.

2. Verfahren nach Anspruch 1, **dadurch gekennzeichnet, dass** das verwendete flüssige härtbare Produkt (17) ein polymerisierbares Harz ist, insbesondere ein Epoxyharz, das gegebenenfalls gefüllt ist, um eine pastöse Konsistenz aufzuweisen.

3. Verfahren nach Anspruch 1 oder 2, **dadurch gekennzeichnet, dass** es einen Schritt des Eintreibens der Einlage (5) in das zu behandelnde Loch (15) mit Hilfe eines Doms (16) umfasst.

4. Verfahren nach einem der Ansprüche 1 bis 3, **dadurch gekennzeichnet, dass** es einen Schritt der Winkelorientierung der Einlage (5) in dem zu behandelnden Loch (15) umfasst, um die Einlage (5) auf die zweckmäßigste Weise in dem Loch (15) anordnen zu können.

5. Einlage (5) zur Reparatur einer Verankerung einer Eisenbahnschiene (1) auf einer Holzschwelle für die Durchführung des Verfahrens nach einem der Ansprüche 1 bis 4, wobei die Einlage (5) in Form des peritubulären Längsteils eines Rohres, insbesondere eines Halbrohres vorliegt, umfassend durch sie hindurchgehende Löcher (6), die ihre konkave Fläche (5d) und ihre konvexe Fläche (5e) miteinander verbinden sollen und eine vorbestimmte Länge aufweisen, so dass diese Länge etwas geringer ist als die Tiefe des Lochs (15) der zu behandelnden Schwelle.

6. Einlage (5) nach Anspruch 5, **dadurch gekennzeichnet, dass** jede Einlage (5) aus einer synthetischen Pressmasse besteht.

7. Einlage (5) nach Anspruch 5 oder 6, **dadurch gekennzeichnet, dass** sie Löcher (6) umfasst, die stufenweise über ihre Länge angeordnet sind.

8. Einlage (5) nach einem der Ansprüche 5 bis 7, **dadurch gekennzeichnet, dass** sie im Wesentlichen quer verlaufende Rippen (8) umfasst, die aus ihrer konvexen Fläche herausragen.

9. Einlage (5) nach einem der Ansprüchen 5 bis 8, **dadurch gekennzeichnet, dass** sie innere Furchen (7) umfasst, die aus ihrer konkaven Fläche (5d) gebildet werden.

10. Einlage (5) nach Anspruch 9, **dadurch gekennzeichnet, dass** die Furchen (7) in der Längsrichtung gegen die Rippen (8) versetzt sind.

11. Einlage (5) nach einem der Ansprüche 5 bis 10, **dadurch gekennzeichnet, dass** sie Mittel (10, 11) umfasst, die ein Verdrehen derselben mit einem Werkzeug (16) ermöglichen, wobei das Werkzeug (16) verwendet wird, um eine Winkelorientierung der Einlage (5) in dem zu behandelnden Loch (15) zu bewirken.

12. Einlage (5) nach einem der Ansprüche 5 bis 11, **dadurch gekennzeichnet, dass** sie ein Ende (5f) umfasst, das sich an der Unterkante befindet, wenn die Einlage (5) in das zu behandelnde Loch (15) eingeführt ist, wobei dieses Ende eine verbreiterte Form, insbesondere die Form eines Kreisabschnitts und vorzugsweise eine konische Form aufweist und wenigstens teilweise die untere Öffnung (15a) des zu behandelnden Lochs (15) verschließen kann, wenn das Loch (15) frei ist.

13. Einlage (5) nach einem der Ansprüche 5 bis 12, **dadurch gekennzeichnet, dass** jede Einlage (5) Rippen umfasst, die auf dem oberen Teil ihrer konvexen Fläche angeordnet sind und ihre Rotation im Moment des Einschraubens der Schwellenschraube verhindern können.

14. Einlage (5) nach einem der Ansprüche 5 bis 13, **dadurch gekennzeichnet, dass** sie einen Teil (5a) mit konstantem Durchmesser und einen Teil (5b) aufweist, der sich nach der mittleren Zone der Einlage (5) zu einem Ende (5c) der Einlage hin verbreitert.

15. Baugruppe, die mehrere Einlagen (5) nach einem der Ansprüche 5 bis 14 umfasst, **dadurch gekennzeichnet, dass** diese Einlagen durch eine oder mehrere Verbindungen verknüpft sind, die das Halten der Einlagen in einer entsprechenden erwünschten Position ermöglichen.
